(19) Europäisches Patentamt
European Patent Office
Office européen des brevets

(11) **EP 4 280 528 A1**

(12) **EUROPEAN PATENT APPLICATION**

(43) Date of publication:
**22.11.2023 Bulletin 2023/47**

(21) Application number: **22174005.3**

(22) Date of filing: **18.05.2022**

(51) International Patent Classification (IPC):
**H04L 7/00** (2006.01)    **H04L 25/03** (2006.01)
**H04B 1/7183** (2011.01)

(52) Cooperative Patent Classification (CPC):
**H04L 25/03012; H04L 7/0025; H04L 7/0037;**
**H04B 1/7183**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Technische Universität Graz**
  **8010 Graz (AT)**
• **Joanneum Research Forschungsgesellschaft
  mbH
  8010 Graz (AT)**

(72) Inventors:
• **GAPPMAIR, Wilfried
  8051 Graz (AT)**
• **SCHLEMMER, Harald
  8054 Hitzendorf (AT)**
• **SCHMIDT, Michael
  8046 Stattegg (AT)**
• **EBERT, Johannes
  8111 Gratwein-Straßengel (AT)**

(74) Representative: **Weiser & Voith
Patentanwälte Partnerschaft
Kopfgasse 7
1130 Wien (AT)**

(54) **M-PAM RECEIVER AND METHOD FOR SYNCHRONISING THE SAME**

(57)    The present invention relates to an M-PAM receiver (1) comprising: an input (2) receiving an M-PAM signal (r); a first and a second filter (9, 10) filtering, in cycles ($C_k$), the signal, to obtain a first and a second filtered signal (f, f'); an extraction unit (11) extracting, at a time offset ($\Delta t_c$) within a current cycle ($C_c$), a first sample ($z_c$) and a second sample ($z'_c$) from the first and second filtered signals; a timing error detector (12) multiplying the first and the second sample of the current cycle to obtain an error signal ($e_c$); and a loop filter (14) adjusting the time offset ($\Delta t_{c+1}$) for a subsequent cycle ($C_{c+1}$) on the basis of the error signal ($e_c$) of the current cycle ($C_c$) to reduce the error signal ($e_k$) over time. The invention further relates to a method (3) for synchronising the receiver (1).

*Fig. 1*

EP 4 280 528 A1

**Description**

The present invention relates to a multi-level pulse amplitude modulation (M-PAM) receiver and a method for synchronising the same.

In a typical M-PAM communication scheme, an M-PAM transmitter modulates the amplitude of a sequence of time-shifted copies of a base pulse. By the modulation, each base pulse of said sequence is furnished with one of a finite number of M alternative amplitude levels to encode one of M symbols, all symbols together forming an "alphabet". Thus, the sequence of pulses, i.e. the "M-PAM signal", encodes symbols over time, wherein each symbol occupies a period of time in the length of a base pulse also known as "symbol duration" (or "pulse duration") which is the inverse of the symbol rate (also called "pulse rate").

The M-PAM signal is transmitted from the M-PAM transmitter via a physical channel, e.g., a cable, a waveguide, free-space, etc., which attenuates the signal and adds noise, to an M-PAM receiver which repeatedly extracts samples of the M-PAM signal. The symbols are finally recovered in a decision device from the extracted samples.

To enable symbol recovery at a high signal-to-noise ratio, each sample extraction should be carried out close to the peak of each pulse to ensure a proper distinction between different amplitude levels. To this end, the extraction times in the M-PAM receiver are synchronised with the received M-PAM signal. The closer a sample is extracted to the peak of a pulse, the more distinctive is the sample. Hence, for a constant number M of alternative symbols, less signal power is required to achieve an error-free symbol recovery, on the one hand, and, for a constant signal power, a larger number M of distinguishable alternative symbols can be used, on the other hand, to increase information throughput.

There exists a multitude of measures to determine and improve extraction timing at the M-PAM receiver such as feedforward and feedback schemes. Normally, feedback schemes employ a so-called "timing error detector" and a "loop filter". The timing error detector generates an error signal indicative of the timing error from the extracted samples; the loop filter determines, from the generated error signal, a new extraction time that is used ("fed-back") in the subsequent extraction for reducing the error signal over time.

A variety of timing error detectors and loop filters is known in the art: In so-called "data-aided" schemes, the error signal is generated on the basis of a known sequence of symbols (e.g. a pilot signal); in non-data aided schemes, the error signal is generated based on the extracted samples only, as described, for example, in Mengali, Umberto, et al. "Synchronization Techniques for Digital Receivers", New York Plenum Press, 1997, and in Meyr, H., et al. "Digital Communication Receivers: Synchronization, Channel Estimation, and Signal Processing" John Wiley & Sons, Inc., 1998. Current solutions, however, still suffer from high complexity and high residual timing errors and, consequently, from errors in symbol recovery, from impeded information transfer and/or from higher transmission powers required for symbol recovery.

The object of the invention is to overcome the drawbacks and restraints in the state of the art and to provide an M-PAM receiver and a method for synchronising the M-PAM receiver, each allowing for a simple, accurate and low complex synchronisation of the M-PAM receiver.

In a first aspect, this object is achieved by an M-PAM receiver comprising:

an input for receiving an M-PAM signal;
a first and a second filter connected to the input and configured to filter, in a series of cycles, each cycle lasting a symbol duration of the M-PAM signal, the received M-PAM signal, wherein the first filter has a constant amplitude frequency response to obtain a first filtered signal and the second filter has a linear amplitude frequency response to obtain a second filtered signal;
an extraction unit connected to the first and the second filter and configured to extract, in each cycle of the series, at a time offset within a current cycle of the series, a first sample from the first filtered signal and a second sample from the second filtered signal;
a timing error detector connected to the extraction unit and configured to multiply, in each cycle of the series, the first and the second sample of the current cycle to obtain an error signal; and
a loop filter connected to the timing error detector and the extraction unit and configured to adjust the time offset for a subsequent cycle of the series on the basis of the error signal of the current cycle to reduce the error signal over time.

According to the feedback scheme of this M-PAM receiver, the specific dual-filter structure comprised of the first and second filters is combined with the specific determination of the error signal in the timing error detector. Thereby, sample extraction is required only once per cycle, such that the M-PAM receiver can be of low complexity.

Due to the constant and linear amplitude frequency responses of the first and second filters, the error signal is a very robust and accurate measure for timing synchronisation and can simply be determined by multiplication. Moreover, the constant amplitude frequency response of the first filter allows to filter out out-of-band noise, e.g. of frequencies outside the M-PAM signal, such that sample extraction (and downstream symbol recovery) can be carried out at a favourable signal-to-noise ratio.

Based on the multiplied error signal, the loop filter - which may be of any desired structure - adjusts the time offset for the subsequent cycle and shifts the extraction time of the subsequent cycle closer to the peak of the pulse of the M-PAM signal, which reduces the error signal and, hence, the timing error, i.e. the difference between the extraction time and the time of the peak of the respective pulse, over time. Research has shown that the error signal allows for an unbiased stabilisation of the extraction time at a timing error close to zero.

Moreover, the feedback scheme carried out by the M-PAM receiver is non-data aided and, hence, does neither require symbol recovery to obtain the error signal nor a pilot signal for synchronisation, such that a low complexity and high information throughput can be achieved.

Summing up, due to the structure of the present M-PAM receiver and the functions and interaction of its components, a simple, yet accurate and low complexity synchronisation of the M-PAM receiver with the received M-PAM signal is achieved.

The M-PAM signal may be a radio frequency (RF) signal, in which case the M-PAM receiver is an RF receiver. In a preferred embodiment, the M-PAM receiver is an optical receiver, preferably a free-space optical receiver. Using an optical M-PAM signal and operating the receiver in the optical frequency range allows for a high symbol rate and a low attenuation by the physical channel, rendering the receiver particularly suitable for free-space applications such as satellite links, etc.

The extraction of the first and second samples can be carried out in different ways, e.g., using interpolation. In an advantageous embodiment of the M-PAM receiver the extraction unit comprises an extraction sampler configured to extract the first sample by sampling the first filtered signal and the second sample by sampling the second filtered signal. Thereby, the time offset employed by the extraction sampler can easily be adjusted by the loop filter, e.g. by acting on a clock or a delay unit of the extraction sampler, to shift the extraction times.

In principle, the M-PAM signal could be composed of pulses of any shape. While rectangular pulse shapes allow for a particularly simple synchronisation - as only extraction times at edges are to be avoided - a rectangular pulse requires a high transmission power and a full spectrum of frequencies, which is incompatible with the limited bandwidth that is typical for many channels. Hence, the M-PAM signal is advantageously comprised of pulses of a bandlimited pulse shape to save both transmission power and available bandwidth for symbol transmission. In particular, when the pulse shape is a squared raised cosine or a squared double jump pulse shape, no negative pulse values are required, which is particularly suited for optical transmission where only the non-negative light intensity is to be modulated.

Preferably, the first and the second filter have a common passband, in particular corresponding to the bandlimited pulse shape. In this case, both filters can filter out noise that is out of band and the second filtered signal is proportional to the time derivative of the first filtered signal. This results in an error signal taking into account both the shape of the pulses (in the first filtered signal) as well as the gradient of the pulses (in the second filtered signal) without being distorted by out-of-band noise.

The loop filter can be of any order to realise a transfer function reducing the error signal over time. The constant or variable filter coefficients can be determined according to standard control theory applied to the feedback loop which is formed by the extraction unit, the timing error detector and the loop filter. In a preferred, particularly simple and lowcomplex embodiment, the loop filter has a summing unit and a filter coefficient in the range

$$\frac{4 \cdot B \cdot T}{K_e} - \frac{8 \cdot (B \cdot T)^2}{K_e} \leq K_T \leq \frac{4 \cdot B \cdot T}{K_e} \ , \qquad (1)$$

preferably a filter coefficient of

$$K_T = \frac{1}{K_e} \cdot \frac{4 \cdot B \cdot T}{1 + 2 \cdot B \cdot T} \qquad (2)$$

with

$K_T$ being the filter coefficient,
$B$ being a predetermined noise bandwidth of a loop formed by the extraction unit, the timing error detector and the loop filter,
$T$ being the symbol duration, and
$Ke$ being an open loop gain of the timing error detector.

Such a loop filter is particularly easy to implement and efficient in reducing the error signal.

In a second aspect, the invention provides a method for synchronising an M-PAM receiver, wherein the method is carried out in the receiver during reception of an M-PAM signal by repeating, in a series of cycles, each cycle lasting a symbol duration of the M-PAM signal, the following steps:

filtering the M-PAM signal by a first filter having a constant amplitude frequency response to obtain a first filtered signal, and by a second filter having a linear amplitude frequency response to obtain a second filtered signal;
extracting, at a time offset within a current cycle of the series, a first sample from the first filtered signal and a second sample from the second filtered signal;
multiplying the first and the second sample of the current cycle to obtain an error signal; and
adjusting the time offset for a subsequent cycle of the series on the basis of the error signal of the current cycle to reduce the error signal over time.

Relating to further embodiments of the method and the advantages thereof, reference is made to the above statements on the M-PAM receiver.

The invention shall now be described in further detail by means of exemplary embodiments thereof under reference to the enclosed drawings, in which:

Fig. 1 shows an embodiment of an M-PAM receiver according to the invention in a schematic block diagram;
Fig. 2 shows an M-PAM signal generated in a transmitter and received by the M-PAM receiver of Fig. 1 in an intensitytime diagram;
Fig. 3 shows a method according to the invention for synchronising the M-PAM receiver of Fig. 1 in a flow diagram;
Fig. 4 shows a filtered signal obtained by a filter of the M-PAM receiver of Fig. 1 and extraction times of samples adjusted according to the synchronisation method of Fig. 3 in a voltage-time diagram;
Fig. 5 shows the samples extracted at the adjusted extraction times of Fig. 4 in a voltage-time diagram;
Fig. 6 shows an error signal determined by a timing error detector of the M-PAM receiver of Fig. 1 in a voltage-time diagram;
Fig. 7 shows an open-loop characteristic ("S-curve") of the M-PAM receiver of Fig. 1 in a diagram of an average error signal over a timing error;
Fig. 8 shows an open-loop detector slope of the M-PAM receiver of Fig. 1 for two four-level PAM schemes employing different pulse shapes in a diagram over a parameter of the pulse shapes; and
Fig. 9 shows a further variant of the M-PAM receiver of the invention in a schematic block diagram.

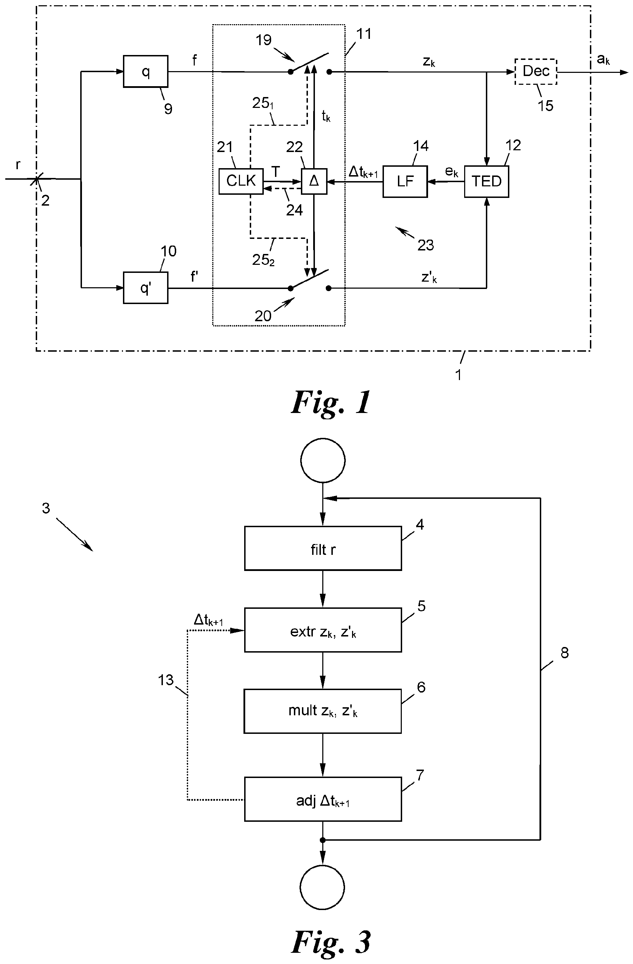

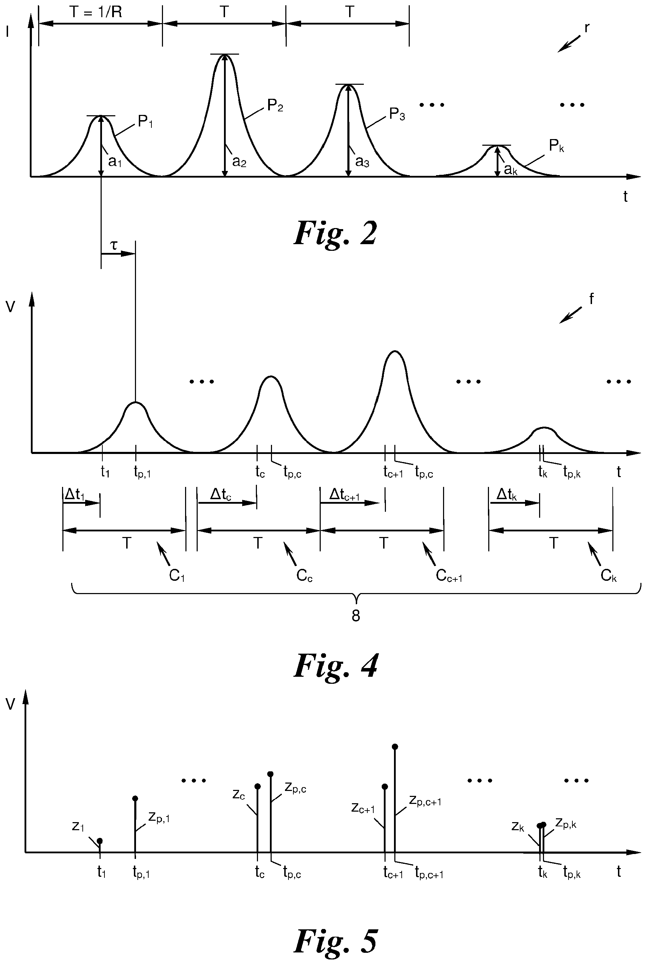

Fig. 1 shows a multi-level pulse amplitude modulation (M-PAM) receiver 1 (henceforth the "receiver" 1) and Fig. 2 an M-PAM signal r generated by an M-PAM transmitter (not shown) and transmitted to the receiver 1 via a physical channel. The M-PAM signal r is received at an input 2 of the receiver 1 after a transit time $\tau$ (Fig. 4) and processed by the receiver 1. The M-PAM signal r may, e.g., be a radio frequency (RF) signal, in which case the receiver 1 is an RF receiver, or an optical signal, in which case the receiver 1 is an optical receiver. In the latter case, the transmitter may comprise an electrooptical converter, e.g., a laser, LED or another light source the intensity of which is modulated, and the input 2 may comprise an opto-electrical converter, e.g. a photosensor, which converts the M-PAM signal r into an electrical signal, e.g. a voltage. Moreover, the physical channel may, e.g. be a cable, a waveguide, free-space, etc.

The M-PAM signal r is generated by modulating the amplitude of a sequence of time shifted copies ("time translates") of a base pulse using different amplitude levels $a_1$, $a_2$, ..., generally $a_k$, each representing a symbol from an alphabet of M different symbols, i.e.

$$r(t) = \sum_k a_k \cdot h(t - k \cdot T) \, , \qquad\qquad (3)$$

wherein h denotes the shape of the base pulse as a function of time, and T is a symbol duration. As shown in Fig. 2, the M-PAM signal r is, thus, comprised of pulses $P_1$, $P_2$, ..., generally $P_k$, each having a pulse shape of the base pulse and the corresponding amplitude level $a_k$ and lasting the symbol duration T (also-called a "pulse duration") which is inverse to a symbol rate R (also-called a "pulse repetition rate"), i.e. T = 1 / R. For instance, the amplitude levels $a_k$ can be chosen from a set of integers, e.g. a binary set, a quaternary set, generally an Mary set such as $a_k \in \{0, 1, 2, 3, ..., M-1\}$. Hence, each amplitude level $a_k$ is a level of the M-PAM, where M can be seen as denoting the number of different amplitude levels used, e.g. a 2-PAM for two different amplitude levels, etc.

The base pulse can have any desired pulse shape, e.g., be rectangular, triangular, saw-tooth shaped, symmetrical, asymmetrical, etc. To save on bandwidth and transmission power, the base pulse and, thus, each pulse $P_k$ optionally has a bandlimited pulse shape, e.g., a squared raised cosine pulse shape according to

$$h(t) = \left( si(t/T) \cdot \frac{\cos(\pi \cdot \alpha \cdot t/T)}{1 - (2 \cdot \alpha \cdot t/T)^2} \right)^2 \qquad (4)$$

or a squared double jump pulse shape according to

$$h(t) = \left( \frac{1-\alpha}{2} \cdot si\big((1-\alpha) \cdot t/T\big) + \frac{1+\alpha}{2} \cdot si\big((1+\alpha) \cdot t/T\big) \right)^2 , \qquad (5)$$

wherein $si$ denotes the sinc-function $si(t) = \sin(\pi t)/\pi t$ and $\alpha$ is the so-called "roll-off factor", which determines a pulse bandwidth required for pulse transmission. For a given roll-off factor $\alpha$ the pulse bandwidth includes only those frequencies $v$ that fulfil the criterion

$$|v| \leq \frac{1+\alpha}{T} . \qquad (6)$$

During reception, the receiver 1 processes the M-PAM signal r to extract first samples $z_1$, $z_2$, ..., generally $z_k$, of the M-PAM signal r from which first samples $z_k$ the amplitude levels $a_k$ and, thus, the transmitted symbols may optionally (and will generally) be recovered. The present receiver 1 synchronises respective extraction times $t_1$, $t_2$, ..., generally $t_k$, of the first samples $z_k$ with the M-PAM signal r to ease the symbol recovery over time. To this end, the receiver 1 carries out a method 3 which shall now be exemplified on the basis of Figs. 1, 3, 4 and 5.

The method 3 of Fig. 3 is carried out while the receiver 1 receives the M-PAM signal r and comprises repeating the following steps 4 to 7 in each of a series 8 of cycles $C_1$, $C_2$, generally $C_k$ (Fig. 4), wherein each cycle $C_k$ lasts a symbol duration T of the M-PAM signal r. When exemplifying the method here below, an index "c" refers to the (current) repetition of the steps 4 to 7 in a "current" cycle $C_c$ and an index "c+1" to a subsequent repetition in a subsequent cycle $C_{c+1}$.

In first step 4, the received M-PAM signal r is filtered by a first and a second filter 9, 10, which are connected to the input 2 and can be analogue or digital filters, e.g., FIR filters. The first and second filters 9, 10 filter out noise that has been induced, e.g. in the physical channel, and is outside of their passbands.

The first filter 9 has a constant amplitude frequency response $|Q(v)|$, i.e. an amplitude frequency response $|Q(v)| = \text{const.}$, to obtain a first filtered signal f, e.g. a frequency response Q(v) according to

$$Q(v) = \sqrt{T} \quad \text{for} \quad |v| < (1+\alpha)/T \quad \text{and} \quad Q(v) = 0 \quad \text{elsewhere} \qquad (7)$$

with $v$ denoting the frequency. This corresponds to an impulse response q(t) of the first filter 9 according to

$$q(t) = \frac{2 \cdot (1+\alpha)}{\sqrt{T}} \cdot si(2 \cdot (1+\alpha) \cdot t/T) . \qquad (8)$$

The second filter 10 has a linear amplitude frequency response $|Q'(v)|$, i.e. an amplitude frequency response $|Q'(v)| \propto v$, to obtain a second filtered signal f', e.g. a frequency response Q'(v) according to

$$Q'(v) = j \cdot 2 \cdot \pi \cdot v \cdot T^{3/2} \quad \text{for} \quad |v| < (1+\alpha)/T \quad \text{and} \quad Q'(v) = 0 \quad \text{elsewhere}, \qquad (9)$$

with j denoting the imaginary unit. This corresponds to an impulse response q'(t) of the second filter 10 according to

$$q'(t) = \frac{1}{\pi \cdot \sqrt{T}} \cdot \left[ \frac{2 \cdot \pi \cdot (1+\alpha) \cdot \cos(2 \cdot \pi \cdot (1+\alpha) \cdot t/T)}{t/T} - \frac{\sin(2 \cdot \pi \cdot (1+\alpha) \cdot t/T)}{(t/T)^2} \right] . \qquad (10)$$

Both filters 9, 10 optionally have a common passband $|v|<(1+\alpha)/T$ which generally (though not necessarily) matches the pulse bandwidth of the M-PAM signal r. The second filtered signal f' may correspond to the time derivative of the first filtered signal f. While the first and second filters 9, 10 are arranged in parallel and have the same passband in the example presented, they may, alternatively, be arranged in series and/or have different passbands.

In second step 5, the first sample $z_k$ (in the current cycle $C_c$: $z_c$) is extracted from the first filtered signal f and a second sample $z'_1$, $z'_2$, ..., generally $z'_k$, here: $z'_c$, is extracted from the second filtered signal f' by an extraction unit 11 which is connected to the first and second filters 9, 10. Both samples $z_c$, $z'_c$ are extracted at a common time offset $\Delta t_1$, $\Delta t_2$, ..., generally $\Delta t_k$, here: $\Delta t_c$, within the current cycle $C_c$ of the series 8. Thus, the time offset $\Delta t_c$ determines the extraction time $t_c$ of the samples $z_c$, $z'_c$ within the current cycle $C_c$.

In a third step 6, the first and second samples $z_c$, $z'_c$ that have been extracted in step 5 of the current cycle $C_c$ are multiplied by a timing error detector 12 to obtain an error signal $e_1$, $e_2$, ..., generally $e_k$, here: $e_c$, of the current cycle $C_c$ of the series 8, e.g. generally according to $e_k = z_k \cdot z'_k$.

In final step 7 of the current cycle $C_c$, the time offset $\Delta t_{c+1}$ to be used by the extraction unit 11 in step 5 of the subsequent cycle $C_{c+1}$ of the series 8 (indicated by a dotted arrow 13) is adjusted by a loop filter 14 on the basis of the error signal $e_c$ that has been determined in step 6 of the current cycle $C_c$. To this end, the loop filter 14 is connected to the timing error detector 12 and the extraction unit 11.

By repeating steps 4 - 7 multiple times, i.e. for multiple cycles $C_k$, the error signal $e_k$ is reduced over time. Hence, the error signal $e_k$ is a quantity controlled by the loop filter 14 and the reduction of the error signal $e_k$ over time is the control objective thereof. To achieve this control objective, the dependence of the time offset $\Delta t_{c+1}$ for the subsequent cycle $C_{c+1}$ on the error signal $e_c$ of the current cycle $C_c$ and, hence, the structure of the loop filter 14 can be determined as known from control theory, e.g., according to a suitable transfer function, for instance, of a P-, I-, D-, PI-, PD-, PID-controller. Thereby, the extraction times $t_k$ are gradually shifted over time towards a respective peak extraction time $t_{p,1}$, $t_{p,2}$, ..., generally $t_{p,k}$, as illustrated by the extraction times $t_c$, $t_{c+1}$, ..., $t_k$ in Figs. 4 and 5, such that amplitudes $a_k$ and symbols can be recovered in an optional downstream decision device 15 more easily over time.

It shall be noted that the time offset $\Delta t_1$ used in step 5 of the first cycle $C_1$ of the series 8 can be pre-set, e.g. estimated.

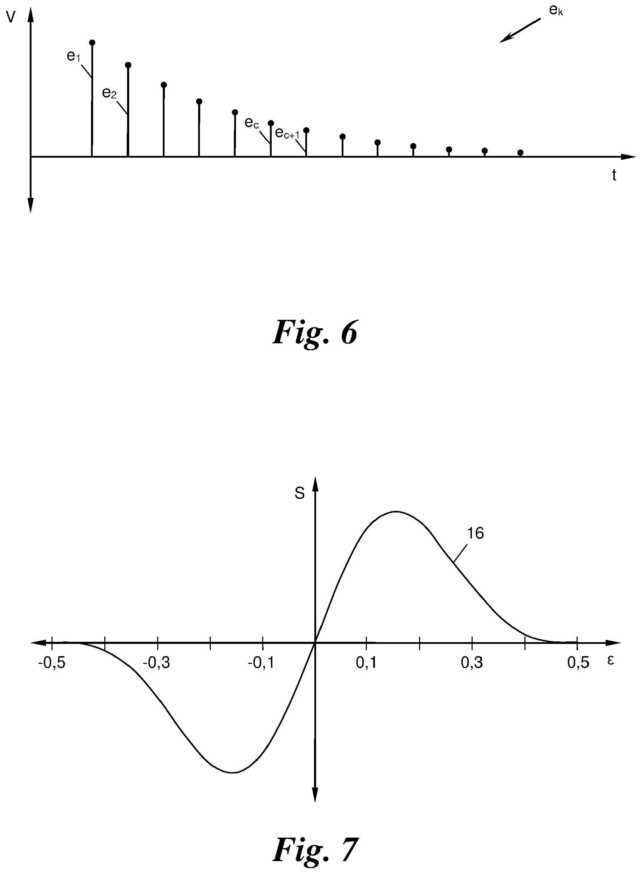

Fig. 6 shows an exemplary result of the method 3, here: an exponentially damped evolution of the error signal $e_k$ over time obtained by an exemplary loop filter 14. It shall be noted, though, that the evolution could alternatively be different, e.g., decreasingly oscillating about the zero-line, initially overshooting, etc. depending on the transfer function and filter coefficients of the loop filter 14.

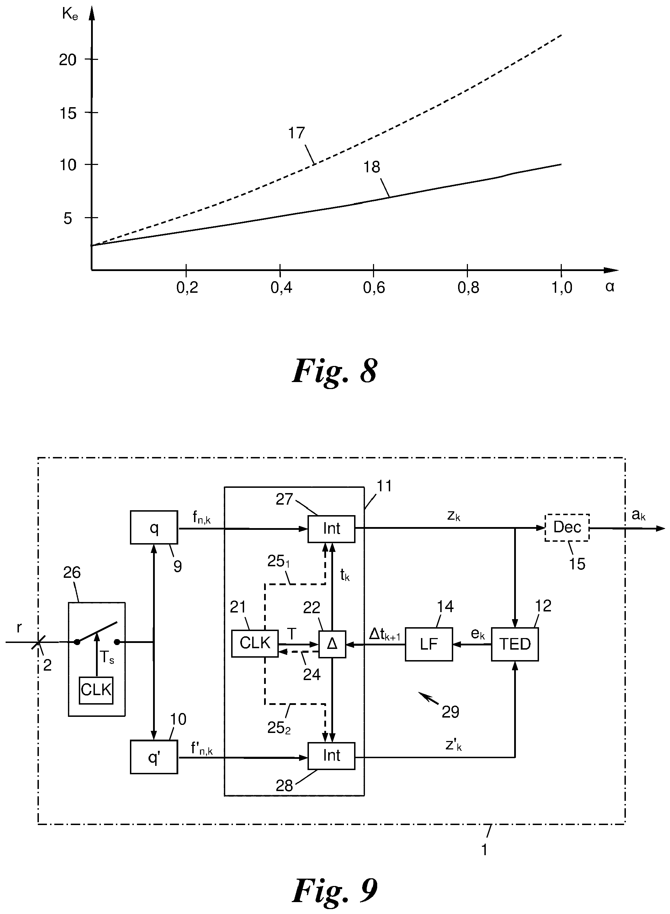

An exemplary set-up of the loop filter 14 and adjusting in step 7 shall now be described with reference to Figs. 7 and 8.

Fig. 7 shows a so-called "S-curve" 16 (or "open-loop characteristic") of the timing error detector 12. The S-curve 16 describes an average of the error signal $e_k$ of an "open-loop" (without step 7 of adjusting the time offset $\Delta t_k$) in dependence on a timing error of sample extraction, i.e.

$$S(\varepsilon) = E[e_k \mid \Delta t_k = const.] \text{ ,} \qquad (11)$$

wherein $\varepsilon = (t_k - t_{p,k}) / T$ denotes a relative timing error and E[] denotes an expectation value.

Research has shown that the S-curve 16 of the timing error detector 12 can be expressed as

$$S(\varepsilon) = 2 \cdot A^2 \cdot \sum_{l=1}^{3} \Psi_l(\alpha) \cdot \sin(2 \cdot \pi \cdot l \cdot \varepsilon) \qquad (12)$$

with A denoting an attenuation factor of the received M-PAM signal r and

$$\Psi_l(\alpha) = \psi_{0,l}(\alpha) + 2 \cdot \mu_a^2 \cdot \sum_{n \geq 1} \psi_{n,l}(\alpha) \text{ ,} \qquad (13)$$

wherein

$$\psi_{n,l}(\alpha) = \frac{2 \cdot \pi}{T} \int_{-(1+\alpha)/T}^{(1+\alpha)/T} v \cdot T \cdot G(v) \cdot G\left(\frac{l}{T} - v\right) \cdot \cos(2 \cdot \pi \cdot n \cdot v \cdot T) \, dv \text{ ,} \qquad (14)$$

$$\mu_a = E[a_k] = \sqrt{\frac{3 \cdot (M-1)}{2 \cdot (2 \cdot M - 1)}} \qquad (15)$$

with M denoting the number of different amplitude levels used, and

$$G(v) = \sqrt{T} \cdot \int_{-\infty}^{\infty} h(t) \cdot e^{-j \cdot 2 \cdot \pi \cdot v \cdot t} \, dt \; . \qquad (16)$$

On the basis of the S-curve 16, the dependence of the time offset $\Delta t_{k+1}$ on the error signal $e_k$ and, hence, the constant or variable filter coefficients of the loop filter 14 can be determined to reduce the error signal $e_k$ over time.

An exemplary loop filter 14 comprises a summing unit and a filter coefficient $K_T$ and, hence, constitutes a first order filter that determines the time offset $\Delta t_{k+1}$ according to

$$\Delta t_{k+1} = K_T \cdot \sum_{n=0}^{N} e_{k-n} \; . \qquad (17)$$

This loop filter 14 may be parameterised by linearising the S-curve 16 around the peak extraction time $t_{p,k}$ to obtain a detector slope $K_e$ of the timing error detector 12 according to

$$K_e = \left. \frac{\partial S(\varepsilon)}{\partial \varepsilon} \right|_{\varepsilon=0} = 4 \cdot A^2 \cdot \pi \cdot \sum_{l=1}^{3} m \cdot \Psi_l(\alpha) \; , \qquad (18)$$

and by choosing the filter coefficient $K_T$ of the loop filter 14 in the range

$$\frac{4 \cdot B \cdot T}{K_e} - \frac{8 \cdot (B \cdot T)^2}{K_e} \leq K_T \leq \frac{4 \cdot B \cdot T}{K_e} \; , \qquad (1)$$

in particular choosing the filter coefficient $K_T$ as

$$K_T = \frac{1}{K_e} \cdot \frac{4 \cdot B \cdot T}{1 + 2 \cdot B \cdot T} \qquad (2)$$

with

*B* ..........   being a predetermined noise bandwidth of a loop formed by the extraction unit 11, the timing error detector 12 and the loop filter 14,

*T* ..........   being the symbol duration, and

*Ke* .........   being the detector slope of the timing error detector 12.

In other examples, the loop filter 14 determines the time offset $\Delta t_{k+1}$ differently, e.g., according to a constant, a linear or a non-linear transfer function.

Two exemplary curves 17, 18 of the detector slope $K_e$ for a 4-PAM scheme which may be used to parameterise the loop filter 14 are depicted in Fig. 8 for a squared double jump pulse shape (dashed curve 17) and a squared raised cosine pulse shape (solid curve 18).

Two different variants of extracting the first and second samples $z_k$, $z'_k$ (step 5 of the method 3) shall now be described by comparing the embodiments shown in Figs. 1 and 9.

Fig. 1 depicts a first embodiment in which the receiver 1 extracts the samples $z_k$, $z'_k$ by sampling. To this end, the extraction unit 11 has a first sampler 19 sampling the first filtered signal f and a second sampler 20 sampling the second filtered signal f'. Both samplers 19, 20 are triggered by a common clock 21 having a clock rate of the symbol rate R that is inverse to the symbol duration T. The clock 21 has a delay unit 22 which employs the time offset $\Delta t_k$ within each cycle $C_k$ that has been adjusted by the loop filter 14 in the preceding cycle $C_{k-1}$ as described above with respect to Fig. 3 to shift the respective extraction time $t_k$. The two samplers 19, 20, the clock 21 and the delay unit 22, thus, form an extraction sampler 23 comprised by the extraction unit 11.

It shall be noted that shifting the extraction times $t_k$ by the time offset $\Delta t_k$ can also be seen as shifting the cycles $C_k$ themselves. Hence, in case of different time offsets $\Delta t_k$, $\Delta t_{k+1}$ in consecutive cycles $C_k$, $C_{k+1}$ of the series 8, these cycles $C_k$, $C_{k+1}$ - each lasting a symbol duration T - may be shifted in time to become separated or overlapping, depending on the size of the time offsets $\Delta t_k$, $\Delta t_{k+1}$. Accordingly, the delay unit 22 may alternatively shift clock cycles of the clock 21 (symbolised by dashed arrows 24, $25_1$, $25_2$ in Fig. 1) which, in this case, may be a numerically controlled oscillator (NCO), a voltage controlled oscillator (VCO), or the like.

Fig. 9 illustrates a second embodiment in which the receiver 1 extracts the samples $z_k$, $z'_k$ by interpolation. To this end, the input 2 of the receiver 1 comprises an input sampler 26 which samples the received M-PAM signal r at a sampling rate that is inverse to a sampling duration $T_s$. The sampling rate may be equal to or higher than the symbol rate R, e.g. a multiple of the symbol rate R. In this embodiment, the first and second filters 9, 10 are digital filters to obtain the first and second filtered signals f, f' each as a train of sampled values $f_{n,k}$, $f'_{n,k}$ (n = 1, ..., $N_k$; $N_k$ denoting the number of sampled values in each cycle $C_k$ and optionally differing from cycle to cycle). The extraction unit 11 comprises two interpolation units 27, 28 which, in combination with the clock 21 and the delay unit 22 (functioning as described above with reference to Fig. 1), form an interpolator 29. The first interpolation unit 27 extracts, in each cycle $C_k$, the first sample $z_k$ by interpolation; the second interpolation unit 28 extracts, in each cycle $C_k$, the second sample $z'_k$ by the interpolation.

When considering a current cycle $C_c$, the first interpolation unit 27 extracts the first sample $z_c$ by interpolating the sampled values $f_{n,c}$ of the first filtered signal f of the current cycle $C_c$ of the series 8 (and optionally some of the sampled values $f_{n,c-1}$ of the preceding cycle $C_{c-1}$). The interpolating may be carried out as known in the art by evaluating a predetermined (linear or non-linear) test function at the time offset $\Delta t_c$ within the current cycle $C_c$ based on the sampled values $f_{n,c}$ (and optionally $f_{n,c-1}$). Moreover, the second interpolation unit 28 extracts the second sample $z'_c$ by interpolating the sampled values $f'_{n,c}$ of the second filtered signal f' of the current cycle $C_c$ of the series 8 (optionally also some of the sampled values $f'_{n,c-1}$ of the preceding cycle $C_{c-1}$), e.g. as described above for the first interpolation unit 27. Hence, the time offset $\Delta t_c$ within the current cycle $C_c$ - and, thus, the extraction time $t_c$ - provides the interpolation point for the extraction of both samples $z_c$, $z'_c$.

It shall be noted that the synchronisation of the extraction times $t_k$ described hereabove can optionally be combined with methods for frequency and/or phase recovery as known in the art. Moreover, each of the elements first and second filter 9, 10, first and second extraction sampler 19, 20, first and second interpolator 27, 28, timing error detector 12, loop filter 14 and decision device 15 can be realised e.g., as a programmable computer or microcontroller executing a corresponding software, or as a specific hardware device such as an ASIC, ASIP, FPGA, etc.

The present invention is not restricted to the specific embodiments described in detail herein, but encompasses those variants, combinations and modifications thereof that fall within the scope of the appended claims.

**Claims**

1. A multi-level pulse amplitude modulation, M-PAM, receiver (1) comprising:

   an input (2) for receiving an M-PAM signal (r);
   a first and a second filter (9, 10) connected to the input (3) and configured to filter (4), in a series (8) of cycles ($C_k$), each cycle ($C_k$) lasting a symbol duration (T) of the M-PAM signal (r), the received M-PAM signal (r), wherein the first filter (9) has a constant amplitude frequency response to obtain a first filtered signal (f) and the second filter (10) has a linear amplitude frequency response to obtain a second filtered signal (f');
   an extraction unit (11) connected to the first and the second filter (9, 10) and configured to extract (5), in each cycle ($C_k$) of the series (8), at a time offset ($\Delta t_c$) within a current cycle ($C_c$) of the series (8), a first sample ($z_c$) from the first filtered signal (f) and a second sample ($z'_c$) from the second filtered signal (f');
   a timing error detector (12) connected to the extraction unit (11) and configured to multiply (6), in each cycle ($C_k$) of the series (8), the first and the second sample ($z_c$, $z'_c$) of the current cycle ($C_c$) to obtain an error signal ($e_c$); and
   a loop filter (14) connected to the timing error detector (12) and the extraction unit (11) and configured to adjust (7) the time offset ($\Delta t_{c+1}$) for a subsequent cycle ($C_{c+1}$) of the series (8) on the basis of the error signal ($e_c$) of the current cycle ($C_c$) to reduce the error signal ($e_k$) over time.

2. The M-PAM receiver according to claim 1, wherein the M-PAM receiver (1) is an optical receiver, preferably a free-space optical receiver.

3. The M-PAM receiver according to claim 1, wherein the extraction unit (11) comprises an extraction sampler (23) configured to extract (5) the first sample ($z_c$) by sampling the first filtered signal (f) and the second sample ($z'_c$) by sampling the second filtered signal (f').

4. The M-PAM receiver according to any one of claims 1 to 3, wherein the M-PAM signal (r) is comprised of pulses ($P_k$) of a bandlimited pulse shape.

5. The M-PAM receiver according to any one of claims 1 to 4, wherein the pulse shape is a squared raised cosine or a squared double jump pulse shape.

6. The M-PAM receiver according to any one of claims 1 to 5, wherein the first and the second filter (9, 10) have a common passband.

7. The M-PAM receiver according to any one of claims 1 to 6, wherein the loop filter (14) has a summing unit and a filter coefficient in the range

$$\frac{4 \cdot B \cdot T}{K_e} - \frac{8 \cdot (B \cdot T)^2}{K_e} \leq K_T \leq \frac{4 \cdot B \cdot T}{K_e} \; ,$$

with

$K_T$ being the filter coefficient,
$B$ being a predetermined noise bandwidth of a loop formed by the extraction unit (11), the timing error detector (12) and the loop filter (14),
$T$ being the symbol duration, and
$Ke$ being a detector slope of the timing error detector (12).

8. The M-PAM receiver according to claim 7, wherein the loop filter (14) has a filter coefficient of

$$K_T = \frac{1}{K_e} \cdot \frac{4 \cdot B \cdot T}{1 + 2 \cdot B \cdot T} \; .$$

9. A method for synchronising a multi-level pulse amplitude modulation, M-PAM, receiver (1), wherein the method (3) is carried out in the receiver (1) during reception of an M-PAM signal (r) by repeating, in a series (8) of cycles ($C_k$), each cycle ($C_k$) lasting a symbol duration (T) of the M-PAM signal (r), the following steps:

filtering (4) the M-PAM signal (r) by a first filter (9) having a constant amplitude frequency response to obtain a first filtered signal (f), and by a second filter (10) having a linear amplitude frequency response to obtain a second filtered signal (f');
extracting (5), at a time offset ($\Delta t_c$) within a current cycle ($C_c$) of the series (8), a first sample ($z_c$) from the first filtered signal (f) and a second sample ($z'_c$) from the second filtered signal (f');
multiplying (6) the first and the second sample ($z_c$, $z'_c$) of the current cycle ($C_c$) to obtain an error signal ($e_c$); and
adjusting (7) the time offset ($\Delta t_{c+1}$) for a subsequent cycle ($C_{c+1}$) of the series (8) on the basis of the error signal ($e_c$) of the current cycle ($C_c$) to reduce the error signal ($e_k$) over time.

10. The method according to claim 9, wherein, in said step of extracting (5), the first sample ($z_c$) is extracted by sampling the first filtered signal (f) and the second sample ($z'_c$) is extracted by sampling the second filtered signal (f').

11. The method according to claim 9 or 10, wherein the M-PAM signal (r) is comprised of pulses ($P_k$) of a bandlimited pulse shape.

**12.** The method according to claim 11, wherein the pulse shape is a squared raised cosine or a squared double jump pulse shape.

**13.** The method according to any one of claims 9 to 12, wherein the first and the second filter (9, 10) have a common passband.

**14.** The method according to any one of claims 9 to 13, wherein said step of adjusting (7) is carried out in a loop filter (14) having a summing unit and a filter coefficient in the range

$$\frac{4 \cdot B \cdot T}{K_e} - \frac{8 \cdot (B \cdot T)^2}{K_e} \leq K_T \leq \frac{4 \cdot B \cdot T}{K_e} \text{ ,}$$

with

$K_T$ being the filter coefficient,
$B$ being a predetermined noise bandwidth of a loop formed by the steps of extracting (5), multiplying (6) and adjusting (7),
$T$ being the symbol duration, and
$Ke$ being an open loop gain of said loop.

**15.** The method according to claim 14, wherein the loop filter (14) has a filter coefficient of

$$K_T = \frac{1}{K_e} \cdot \frac{4 \cdot B \cdot T}{1 + 2 \cdot B \cdot T} \text{ .}$$

*Fig. 1*

*Fig. 3*

*Fig. 2*

*Fig. 4*

*Fig. 5*

**Fig. 6**

**Fig. 7**

**Fig. 8**

**Fig. 9**

Europäisches Patentamt
European Patent Office
Office européen des brevets

## EUROPEAN SEARCH REPORT

Application Number

EP 22 17 4005

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WILFRIED GAPPMAIR ET AL: "Joint recovery of carrier frequency and symbol timing for extremely bandwidth-efficient satellite links", IET COMMUNICATIONS, THE INSTITUTION OF ENGINEERING AND TECHNOLOGY, GB, vol. 12, no. 1, 12 December 2017 (2017-12-12), pages 44-51, XP006097103, ISSN: 1751-8628, DOI: 10.1049/IET-COM.2017.0186 * the whole document * | 1-15 | INV. H04L7/00 H04L25/03 H04B1/7183 |
| Y | GAPPMAIR WILFRIED ET AL: "Blind Symbol Timing Estimation for Bandlimited Optical Intensity Channels", 2020 12TH INTERNATIONAL SYMPOSIUM ON COMMUNICATION SYSTEMS, NETWORKS AND DIGITAL SIGNAL PROCESSING (CSNDSP), IEEE, 20 July 2020 (2020-07-20), pages 1-6, XP033855701, DOI: 10.1109/CSNDSP49049.2020.9249507 [retrieved on 2020-11-04] * the whole document * | 1-15 | |
| Y | SUESSER-RECHBERGER BARBARA ET AL: "Joint Synchronization of Carrier Frequency, Symbol Timing and Sampling Rate in Digital Satellite Receivers", 2018 INTERNATIONAL CONFERENCE ON BROADBAND COMMUNICATIONS FOR NEXT GENERATION NETWORKS AND MULTIMEDIA APPLICATIONS (COBCOM), IEEE, 11 July 2018 (2018-07-11), pages 1-6, XP033390822, DOI: 10.1109/COBCOM.2018.8443974 [retrieved on 2018-08-21] * the whole document * | 1-15 | |

TECHNICAL FIELDS SEARCHED (IPC)

H04L
H04B

The present search report has been drawn up for all claims

| Place of search | Date of completion of the search | Examiner |
|---|---|---|
| Munich | 19 October 2022 | Schiffer, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MENGALI, UMBERTO et al.** Synchronization Techniques for Digital Receivers. Plenum Press, 1997

- **MEYR, H. et al.** Digital Communication Receivers: Synchronization, Channel Estimation, and Signal Processing. John Wiley & Sons, Inc, 1998